# EUROPEAN PATENT APPLICATION

(11) **EP 3 636 539 A1**
(43) Date of publication of application: **15.04.2020**
(21) Application number: 18382724.5
(22) Date of filing: 11.10.2018
(51) Int. Cl.: B64C 1/10

(54) **PANEL FOR AN AIRCRAFT**

(71) Applicant: Airbus Operations, S.L., 28906 Getafe (ES)
(72) Inventor: HERNAIZ LOPEZ, Guillermo, 28905 GETAFE (ES); GARCIA BLANCO, Maria Jose, 28906 GETAFE (ES); AREVALO RODRIGUEZ, Elena, 28906 GETAFE (ES); COLMENAREJO MATELLANO, Nuria, 28906 GETAFE (ES)

(57) **Abstract**

An aircraft panel (1) having two larger sides (2, 3), wherein at least one side (2, 3) has a surface with an undulated cross-sectional profile (4) comprising a first end (5) and a second end (6); at least one peak (7) and one valley (8), both between the first (5) and the second end (6) of the profile (4); and a center (9) coincident either with a peak (7) or a valley (8); wherein the distance between the center (9) and the closest peak (7) or valley (8) in a first direction (D1) defined by the center (9) and the first end (5) is equal to the distance between the center (9), and the closest peak (7) or valley (8) in a second direction (D2) defined by the center (9) and the second end (6); and wherein the panel (1) is continuous and has been manufactured as a single-piece.

## Description

### Object of the invention

The present invention refers to an aircraft panel with higher resistance, in particular, for withstanding bending loads.

One object of the present invention is to provide a panel for an aircraft, which is configured to withstand high loads without needing structural elements as reinforcement.

Another object of the present invention is to provide a panel for an aircraft that is continuous and manufactured as a single-piece.

Another object of the invention is to provide a panel for an aircraft that could be used as a bulkhead able to withstand pressure loads with a reduced thickness.

### Background of the invention

On aircraft applications, all components has to accomplish high standards, especially, structural parts. For this reason, aircraft panels have to be capable of withstanding different types of loads. Among these, pressure loads are generated when there is difference of pressure between one side of the panel and the other one, causing a bending load applied in the out-of-plane direction.

A panel with a planar configuration has a resistance to bending loads lower than the resistance to tensile or compression loads. Because of that, when a bending load is applied, the resistance of the whole panel decreases.

Nowadays, one solution to increase the resistance of aircraft panels to bending loads consists of increasing the thickness of the panel. This solution increases the weight and the dimension of the panel, being not allowable in some applications.

Another current solution to increase the panel resistance consists of adding structural elements as reinforcement, such as stringers and axial beams. However, dimension constraints may make difficult the addition of these elements.

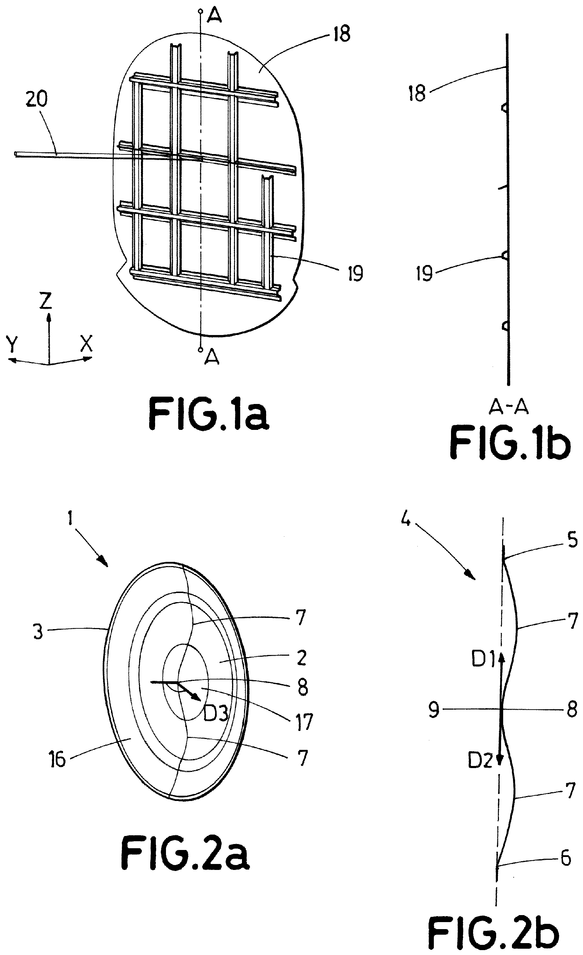

Figure 1a shows a state of art panel (18), having a planar configuration and reinforced with structural elements, stringers (19) and axial beams (20), for supporting bending loads. These structural elements (19, 20) are attached to the panel (18), either by riveting, co-curing, co-bonding or any other method. Nevertheless, this reinforcement involves the increase of the lead time for attaching the reinforcement elements (19, 20) to the panel (18). Moreover, a large number of parts is needed to achieve the required strength, increasing the complexity in the assembly process.

Figure 1b shows the longitudinal section of the panel along the axis (A-A) of the state of art panel (18) shown in Figure 1a. The longitudinal section is substantially straight, with protruding stringers (19).

In the rear section of an aircraft, the tailcone bulkhead is intended for withstanding pressure loads generated by the difference of pressure between the pressurized side of the bulkhead and the atmospheric pressure side. The bulkhead is intended for withstanding and transmitting these loads to the rear fuselage structure.

Nowadays, a common aircraft bulkhead configuration is a panel as shown in Figure 1, configured to withstand pressure loads by adding structural elements.

This configuration increases the lead time for manufacturing the tailcone bulkhead and, therefore, increases the related costs due to the need of adding structural reinforcement elements.

It would therefore be desirable to provide technical means for improving the resistance of aircraft panels without the need for an increase in thickness or the addition of structural elements as reinforcement.

### Summary of the invention

The present invention overcomes the above mentioned drawbacks by providing an aircraft panel having a better structural behavior without needing reinforcement elements, thus, saving weight and reducing lead time and related costs.

One aspect of the present invention refers to an aircraft panel having two larger sides, wherein at least one side has a surface with an undulated cross-sectional profile comprising a first end and a second end, at least one peak and at least one valley, both between the first end and the second end of the profile, and a center, coincident either with a peak or a valley, and wherein the distance between the center and the closest peak or valley in the first direction (D1), defined by the center and the first end, is equal to the distance between the center and the closest peak or valley in the second direction (D2), defined by the center and the second end.

Manufacturing an aircraft panel configured as mentioned above, allows the panel to withstand higher loads while having the same area than state of the art panels. So that, the panel thickness could be reduced with respect to planar panels, withstanding the same load and reducing the overall weight of the component.

Further, the panel of the invention has a similar dimension to the state of the art panels, allowing to use it in aircrafts with minimal modifications from the current rear end design.

In addition, the undulated cross-sectional profile as defined above, provides a symmetric stress distribution, which prevents from having high stress concentration points. A failure in a panel occurs when the highest stress concentration point of the panel has a stress greater than the maximum resistance of the panel in that point, so that a panel having an average stress (S1) and having a symmetric stress distribution will have an overall resistance greater than a panel having the same average stress (S1) without having a symmetric stress distribution.

According to the invention, the panel is continuous and has been manufactured as a single-piece. This way, since the panel of the invention does not need structural elements, such as stringers and stabilization beams, to be attached, the manufacturing process is simplified, avoiding assembly operations such as fastening, co-curing or co-bonding large amount of structural elements to the panel. Thus, reducing the lead time and, therefore, the related costs.

According to a preferred embodiment, the panel has an annular shape. Since the panel has an undulated profile, a radial symmetric stress distribution is achieved. Cause of that, in case of failure, the damage will be produced along a circumference and the panel will remain a significant stiffness to bending loads.

According to another preferred embodiment, the panel is manufactured in composite material, reducing the weight of the panel.

According to another preferred embodiment, the panel has a constant thickness, being both larger surfaces of the panel of same dimensions and, thus, making easier the manufacturing process.

According to another preferred embodiment, the panel comprises a surrounding flange manufactured as a single-piece with the panel.

According to another preferred embodiment, the panel consists of a bulkhead of an aircraft.

Another aspect of the invention refers to an aircraft comprising a tailcone including a frame, and a panel according to the invention, wherein the panel is attached to the frame to form the tailcone bulkhead.

According to a preferred embodiment, the panel is attached to the frame via the surrounding flange of the panel. This attachment makes easier the joint between the panel and the frame and, thus, the assembly time is reduced. In addition, the flange provides space for allowing connections and interfaces of the aircraft systems going through.

### Brief description of the drawings

For a better comprehension of the invention, the following drawings are provided for illustrative and non-limiting purposes, wherein:
Figure 1 shows schematic views of a state of the art panel structure. Drawing A shows a perspective view of the panel. Drawing B shows the profile of the panel.
Figure 2 shows schematic views of a panel structure, according to a first embodiment of the present invention. Drawing A shows a perspective view of the panel. Drawing B shows the profile of the panel.
Figure 3 shows the panel of Figure 2 including means for attaching the panel to an aircraft. Drawing A shows a perspective view of the panel. Drawing B shows the profile of the panel.
Figure 4 shows a schematic view of an aircraft including a panel as a bulkhead.

### Preferred embodiments of the invention

Figure 2 show a panel (1) according to a first preferred embodiment. The panel (1) has two larger sides (2, 3) having an undulated surface profile (4).

According to a preferred embodiment, the panel (1) has a constant thickness, where both larger sides (2, 3) of the panel (1) have surfaces with the same undulated profile (4). In the embodiment of Figure 2, the panel (1) is curved in the out-of-plane direction (D3), defining at least one area with convex curvature (16) and at least one area with concave curvature (17).

Alternatively, the panel (1) may have a variable thickness, one side (2) of the panel (1) having the undulated profile (4) and the other side (3) of the panel (1) having any other different profile.

Figure 2b shows the undulated cross-sectional profile (4) of the panel (1) having a first end (5), a second end (6), a center (9) and a succession of peaks (7) and valleys (8) between the first end (5) and the second end (6). In this preferred embodiment, the profile (4) has one peak (7) and two valleys (8), and the center (9) of the undulated profile (4) is coincident with the peak (7).

Defining a first direction (D1) from the center (9) to the first end (5), and a second direction (D2) from the center (9) to the second end (6), the profile (4) is characterized in that the distance between the center (9) of the profile and the closest valley (8), in the first direction (D1), is the same than the distance between the center (9) and the closest valley (8), in the second direction (D2). Thus, the undulated profile (4) is symmetric with respect to the center (9).

Further, the panel (1) of the invention is continuous and has been manufactured as a single-piece. This way, the panel (1) does not have any split, and can be manufactured as a one piece panel in a one shot process, avoiding assembly operations.

Preferably, the panel (1) will be manufactured of composite material, such as Carbon Fiber Reinforced Polymer (CFRP) and Glass Fiber Reinforced Polymer (GFRP).

As shown in Figure 2a, the panel (1) has an annular shape, but circumferential, elliptical or oval shapes could be possible.

The panel (1) with circumferential shape and undulated cross-sectional profile (4), has a radial symmetric stress distribution. The symmetric stress distribution improves the structural behavior of the panel, avoiding high stresses concentration areas. These stress concentration areas are mainly located at certain points, such as joints or run outs. State of the art panels usually contain these points, limiting the resistance of the panel by its strength in the highest stress point. Avoiding stress concentration, the overall resistance of the panel is increased. Furthermore, in case of failure, the panel (1) of the invention will be damaged along a circumference maintaining some stiffness to bending loads.

The panel (1) of the invention has a higher moment of inertia than state of art panels (18), provided both panels have the same thickness.

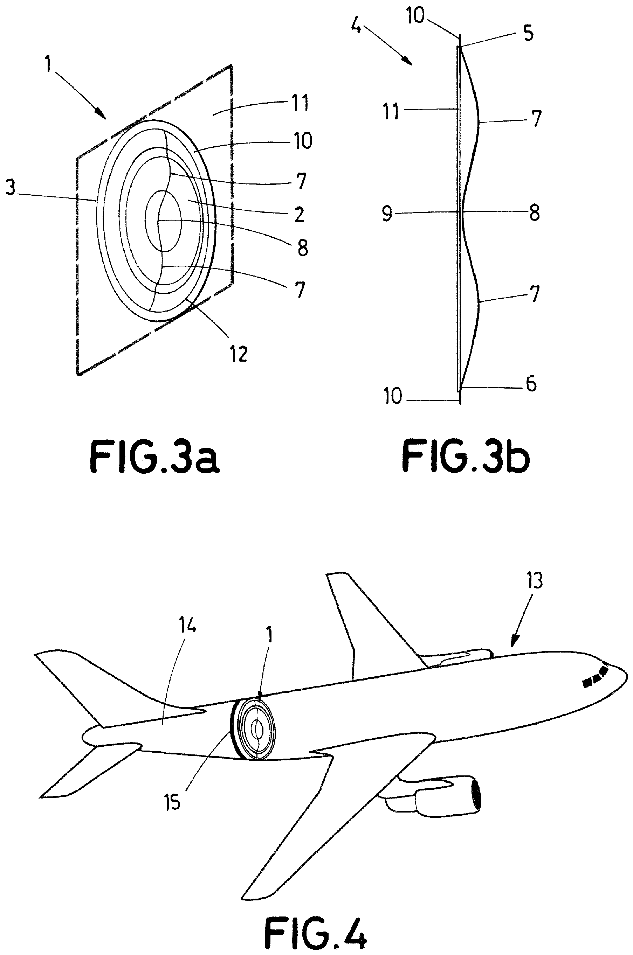

Figure 3a shows the panel (1) having an edge (12) in its outermost part, and a flange (10) supported by said edge (12) and parallel to an imaginary plane (11) containing said edge (12). The flange (10) is manufactured as a single piece with the panel (1), so no joints or attachments are necessary.

In another preferred embodiment of the invention, the flange (10) could be sloped an angle with respect to the imaginary plane (11).

Figure 3b shows the profile (4) of the panel (1) including the surrounding flange (10). The Figure 3b also shows the imaginary plane (11) containing the edge (12) of the panel (1) and, therefore, containing the first end (5) and the second end (6) of the profile (4).

Figure 4 shows an aircraft (13) comprising a tailcone (14) including a frame (15), and the panel (1) as shown in Figure 3a. The panel (1) serves as a single-piece bulkhead able to withstand high bending loads, that could be as great as 0,8 kilograms per square meter. Thin planar panels are not suitable for supporting such a high loads without adding reinforcing elements, while the panel (1) of the invention is able to withstand these high loads cause of its configuration.

As generally known, a bulkhead mounted on an aircraft (13) has to be confined in a delimited space due to the presence of other components. The panel (1) of the invention having a dimension similar to current bulkhead configurations eases the implementation of said bulkhead (1) in the aircraft (13) without the need of making a complicated redesign process. Preferably, a panel (1) serving as a bulkhead (1) would have a height - width- (out of its main plane) and a length (in its main plane) in which the height is less than the 30% of its length.

The flange (10) of the panel (1) will ease the joint between the panel (1) and the frame (15). For this reason, the shape of the flange (10) will be preferably coincident with the shape of the frame (15).

In another preferred embodiment, connections of the aircraft systems are going through the surrounding flange (10).

## Claims

1. An aircraft panel (1) having two larger sides (2, 3), wherein at least one side (2, 3) has a surface with an undulated cross-sectional profile (4) comprising:
- a first end (5) and a second end (6);
- at least one peak (7) and at least one valley (8), both between the first (5) and the second end (6) of the profile (4);
- and a center (9) coincident either with a peak (7) or a valley (8),
wherein the distance between the center (9) and the closest peak (7) or valley (8) in a first direction (D1), defined by the center (9) and the first end (5), is equal to the distance between the center (9) and the closest peak (7) or valley (8) in a second direction (D2), defined by the center (9) and the second end (6), and, wherein the panel (1) is continuous and has been manufactured as a single-piece.

2. An aircraft panel (1) according to claim 1, wherein the panel (1) is made of composite material, and manufactured in one-shot.

3. An aircraft panel (1) according to any of the preceding claims, wherein the panel (1) has a constant thickness, and the two larger sides (2, 3) have a surface with an undulated cross-sectional profile (4).

4. An aircraft panel (1) according to any of the preceding claims, wherein the panel (1) has an annular shape.

5. An aircraft panel (1) according to any of the preceding claims, further comprising a surrounding flange (10), said flange (10) being manufactured as a single piece with the panel (1).

6. An aircraft panel (1) according to claim 5, wherein the panel (1) has an edge (12), and the surrounding flange (10) is parallel to an imaginary plane (11) that contains said edge (12).

7. An aircraft panel (1) according to claim 5, wherein the panel (1) has an edge (12), and the surrounding flange (10) is sloped an angle relative to an imaginary plane (11) that contains said edge (12).

8. An aircraft panel (1) according to any of the preceding claims, wherein the panel (1) is a bulkhead.

9. An aircraft panel (1) according to claim 8, wherein the panel (1) has height less than the 30% of its length.

10. An aircraft (13), comprising a tailcone (14) including a frame (15), and a panel (1) according to any of the preceding claims, wherein the panel (1) is attached to the frame (15) to form the tailcone bulkhead (1).

11. An aircraft (13) according to claim 10, and a panel (1) according to claims 5 to 7, wherein the panel (1) is attached to the frame (15) via the surrounding flange (10) of the panel (1).
